Europäisches Patentamt

European Patent Office

Office européen des brevets

(11) Publication number: **0 261 949**
**A2**

(12) **EUROPEAN PATENT APPLICATION**

(21) Application number: **87308418.0**

(22) Date of filing: **23.09.87**

(51) Int. Cl.⁴: **F 16 C 3/02**

(30) Priority: **24.09.86 US 911280**

(43) Date of publication of application:
**30.03.88 Bulletin 88/13**

(84) Designated Contracting States: **DE FR GB IT SE**

(71) Applicant: **THE GARRETT CORPORATION**
**9851-9951 Sepulveda Boulevard P.O. Box 92248**
**Los Angeles, California 90009 (US)**

(72) Inventor: **Harter, James B.**
**6523 S. Jen Tilly Lane**
**Tempe Arizona 85283 (US)**

**Novkov, Donald J.**
**747 E. Granada Drive**
**Tempe Arizona 85281 (US)**

(74) Representative: **Rees, David Christopher et al**
**Kilburn & Strode 30 John Street**
**London WC1N 2DD (GB)**

(54) Diaphram for a fluid pressure motor and method of making such a diaphragm.

�ινο A diaphragm particularly for rolling-diaphragm type fluid pressure motors. The invention provides greatly improved service life of the motor, particularly under adverse conditions in which conventional diaphragms fail quickly.

FIG 1

FIG 2

EP 0 261 949 A2

## Description

### DIAPHRAM FOR A FLUID PRESSURE MOTOR AND METHOD OF MAKING SUCH A DIAPHRAGM

The present invention relates to a diaphragm structure and a method of making such a diaphragm for fluid pressure motors of the spring-diaphragm type, particularly those of the "rolling" or convoluted diaphragm configuration.

Conventional diaphragms for "rolling" diaphragm fluid pressure motors are constructed by forming an essentially hat shaped fabric part which is thereafter impregnated with an elastomer to render the diaphragm gas impermeable. Generally, the fabric from which the hat shaped part is formed is a square weave of fibrous material, either stranded or twisted together. When such a square weave fabric is formed into a hat shaped configuration, the walls of the cylindrical portion of the hat, which later become the "rolling" or convoluted part of the diaphragm, have four areas within which the fibres of the square weave extend radially and transversely. These radially extending fibres are able to flex easily as the diaphragm "rolls" during action of the fluid pressure motor, and the transverse fibres. are carried along without significant relative movement between the radial and transverse fibres.

However, the square weave of the fabric also results in there being four areas of the cylindrical portion of the diaphragm in which the fibres of the weave lie at substantially 45 degrees to a radial line. When the fibres within these latter portions of the diaphragm "roll" through the convoluted part of the diaphragm as the actuator moves, the fibres move angularly relative to one another in somewhat of a sawing or teeter-totter motion. The Applicants have discovered that conventional elastomerically impregnated fabric rolling diaphragms, because of this sawing of the fibres in certain areas of the diaphragm, experience an overstressing of the elastomer in these areas which results in the eventual failure of the diaphragm.

A conventional teaching which seems to improve the flexibility of the diaphragm is shown in US Patent No. 2,730,131 issued to H.L. Asp et al in which a somewhat flat diaphragm intended for relatively short movement is formed by cutting a disc from a thick walled cylinder of material such as Teflon. Prior to severing the disc from the cylinder, a multitude of axially transverse radial cuts are made extending from the outer perimeter of the incomplete disc, which is to become the diaphragm, part way to its centre. This multitude of radially extending cuts results in a completed diaphragm having a plurality of distinct transverse layers which are separately movable relative to one another during flexing of the diaphragm. However, such a diaphragm is not taught as being appropriate for use in a rolling diaphragm type of fluid pressure motor. Further, the Asp et al diaphragm does not incorporate any type of fabric or fibrous reinforcement within the impermeable flexible or elastomeric material from which the diaphragm is formed. This lack of fabric reinforcement within the diaphragm as taught by Asp is believed by the Applicants to result in a diaphragm having relatively limited pressure capabilities. It is clear that the diaphragm as taught by Asp must rely entirely upon the strength of the elastomer alone to resist the forces imposed upon the diaphragm by the operating pressures of the fluid motor.

A fabric reinforced elastomeric membrane is shown in US Patent No. 3,376,898 issued to Hugley, in which the membrane is subdivided into discrete axially extending layers to enhance the flexibility of the membrane. However, the cylindrical membrane taught by Hugley is not seen by the Applicants as being applicable to the making of diaphragms for rolling diaphragm fluid motors. While the Hugley patent does teach a fluid impermeable membrane having a plurality of distinct layers which are relatively movable, it is noted that each one of the layers within the membrane is composed of a fibrous fabric impregnated with an elastomer. In this respect then the Hugley patent will be seen merely to aggregate conventional diaphragm teachings.

In view of the above it will be appreciated that an improved diaphragm, particularly for rolling diaphragm applications, is needed. As noted above the Applicants have observed that the fibres of a rolling diaphragm, particularly in the areas where the fibres cross one another at substantially 45 degrees with respect to a radial line, saw against one another during movement of the diaphragm such that the elastomer impregnated into the fabric is overstressed and fails. Accordingly, it is an object of the present invention to provide a diaphragm particularly for rolling diaphragm applications in which the fibres of the fabric reinforcement are less prone to failure.

According to the invention, there is provided a diaphragm having a flexing portion, characterised in that it comprises: a gas impermeable membrane member having a selected configuration and being composed essentially of an elastomeric material, and a gas permeable fabric member having the same configuration and being composed essentially of a fibrous fabric, the membrane member and the fabric member being arranged to be united in use without interbonding in the flexing portion. This allows movement of the two members in unison in response to fluid pressure applied to the membrane member while the fabric member supportively receives fluid pressure forces above a particular level, and the woven fibres of the fabric member are free to move relative to one another in the flexing portion.

Preferably, the membrane member and the fabric member each have radially extending flange portions, the flange portions of the two members being congruent. Preferably the membrane member and the fabric member, in their unrestrained conditions, each define a respective substantially cylindrical or slightly frustroconical portion to form the flexing portion of the diaphragm which in turn forms an annular convolute. The two members may be substantially identical hat-shapes.

Preferably, in the flexing portion, the membrane member is free of fibrous reinforcement and the fabric member is free of impermeable elastomeric material. Preferably, during movement of the diaphragm, the membrane and fabric members flex through or as a convolute in the flexing portion.

Preferably, the membrane member is of yieldable shape-retaining character, the fabric member also being of yieldable shape-retaining nature, the membrane member and the fabric member being of similar shape for movement in unison in response to movement of the diaphragm member. Preferably, one of the two members is nested within the other. The two members are preferably clamped together at their flange portions and they may also be adhesively intersecured only at their respective flange portions, the flange portions not forming part of the flexing portion.

Preferably, the membrane and fabric members each include a central annular disc portion connected respectively to the generally cylindrical or frustroconical part. Preferably, there is an actuating rod arranged to move in response to movement of the diaphragm, the actuating rod carrying a support member engaged by the disc portion of the fabric member.

According to a preferred form, therefore, the invention may provide a diaphragm having a flexing portion and comprising a gas impermeable elastomeric yieldably shape-retaining membrane member composed essentially of relatively thin sheet-like elastomeric material formed to a selected configuration; a gas permeable, yieldably shape-retaining fabric member composed essentially of inextensible fibrous woven cloth formed to a determined configuration complementary with the said selected configuration; the membrane member and the fabric member being united without interbonding in the flexing portion for movement in unison in response to fluid pressure applied to the membrane member while the fabric member supportively receives fluid pressure forces from the membrane member above a selected level, and the woven fibres of the cloth are free to move relative to one another in the flexing portion.

Accordingly the present invention may provide a diaphragm inlcuding a gas-impermeable flexible elastomeric membrane member having a first face exposed to a relatively higher fluid pressure effecting a force on the membrane member. The membrane member has a pair of relatively movable portions interconnected by a flexing portion, the latter being free of fibrous inextensible reinforcing material. A gas-permeable, flexible substantially inextensible fibrous reinforcing fabric member is in supporting relationship with a second face of the membrane member opposite the first face. This fabric member communicates a relatively lower fluid pressure to the second face of the membrane to effect the force thereon. The fabric member similarly has a respective pair of relatively movable portions interconnected by a respective flexing portion. The flexing portion of the fabric member is free of elastomeric material.

An advantage of the present invention over conventional diaphragms is a markedly improved sensitivity of the diaphragm to differential pressures. That is, because the diaphragm is composed of an air impermeable membrane supported by an air permeable fabric, both of which are relatively limp, the diaphragm is able to respond by movement to smaller differential pressures than those to which a conventional diaphragm will respond. The diaphragm of the invention is also able to function at the same high pressures as a conventional diaphragm. Furthermore, testing has shown that the flex life of a diaphragm according to the present invention far exceeds that of a conventional diaphragm made with the same materials.

An additional advantage of the present invention is a reduced "memory" of the diaphragm. In other words, conventional diaphragms are rather strongly shape-retaining because they are composed of a fabric material impregnated with an elastomer. On the other hand, the present diaphragm has a much reduced shape-retaining character in comparison with conventional diaphragms.

According to another aspect of the invention, there is provided a fluid pressure motor incorporating a diaphragm as defined above, in which the fabric member and the membrane member are clamped together by two sections of a housing thereby dividing the chamber formed within the housing into first and second cavities whose volumes are variable in dependence upon the position of diaphragm.

Preferably, the first cavity has an inlet for connection to a source of high pressure, the second cavity is open to ambient pressure, and resilient means are provided to urge the diaphragm towards the first cavity. Preferably, the membrane member faces the first cavity and the fabric member faces the second cavity. Preferably, the membrane member is unsupported by the flexing portion of the fabric member at differential fluid pressure levels lower than a determined value, the membrane member stretching to be supportingly engaged by the fabric member at the flexing portions of the two members at differential fluid pressures above the determined value.

According to a further aspect of the invention, there is provided a method of making a highly flexible diaphragm characterised by the steps of forming a gas-permeable fibrous fabric member having a selected shape including a flexing region, forming a gas-impermeable elastomeric membrane member having a certain shape cooperably matching with the selected shape of the fabric member and including a flexing region corresponding with the flexing region of the fabric member, and operatively uniting the fabric member and the membrane member without interbonding between them in their respective flexing regions.

Preferably, the method includes adhesively intersecuring the fabric member and the membrane member to one another in a selected region apart from the corresponding flexing regions, which selected region does not flex during working of the diaphragm.

Further advantages of the present invention reside in reduced manufacturing costs. One of the reasons for reduced cost is that conventional diaphragms require adhesion testing of the fabric material after it is impregnated with elastomer. The adhesion of the elastomeric material with the fabric must be tested by an application of gas pressure to the completed diaphragm. Such adhesion testing is not necessary with the diaphragm according to the present invention. Accordingly, it is believed that reduced scrappage rates will also result in manufacture of diaphragms according to the present invention in comparison with conventional diaphragms.

In its broadest sense, the invention may be considered to extend to fluid pressure motor apparatus comprising: a housing defining a chamber therein, a flexible diaphragm member in the chamber sealingly cooperating with the housing to divide the chamber into a first and a second variable-volume cavity expanding and contracting in opposition with movement of the diaphragm member; the diaphragm member including (a) a sheet-like gas-impermeable elastomeric membrane member which is free of fibrous reinforcement in a selected portion thereof, and (b) a flexible, fibrous, gas-permeable, fabric-like member juxtaposed with the membrane member in cooperable supporting relation therewith.

The invention may also provide a diaphragm comprising: a gas-impermeable flexible elastomeric membrane member having a first face exposed to a relatively higher fluid pressure effecting a force on the membrane member, the membrane member having a pair of relatively movable portions interconnected by a flexing portion, the flexing portion being free of fibrous inextensible reinforcing material; and a gas-permeable flexible substantially inextensible fibrous reinforcing fabric member in supporting relationship with a second face of the membrane member opposite the first face, the fabric member communicating a relatively lower fluid pressure to the second face to effect the force on the membrane member, the fabric member similarly having a respective pair of relatively movable portions interconnected by a respective flexing portion, the fabric member being free of elastomeric material in the flexing portion thereof.

The invention may be carried into practice in various ways, and one embodiment will now be described by way of example with reference to the accompanying drawings, in which:-

Figure 1 is a partial cross-sectional view of a fluid pressure motor of the spring-rolling diaphragm type embodying the invention; and

Figure 2 depicts two component parts of a diaphragm according to the present invention.

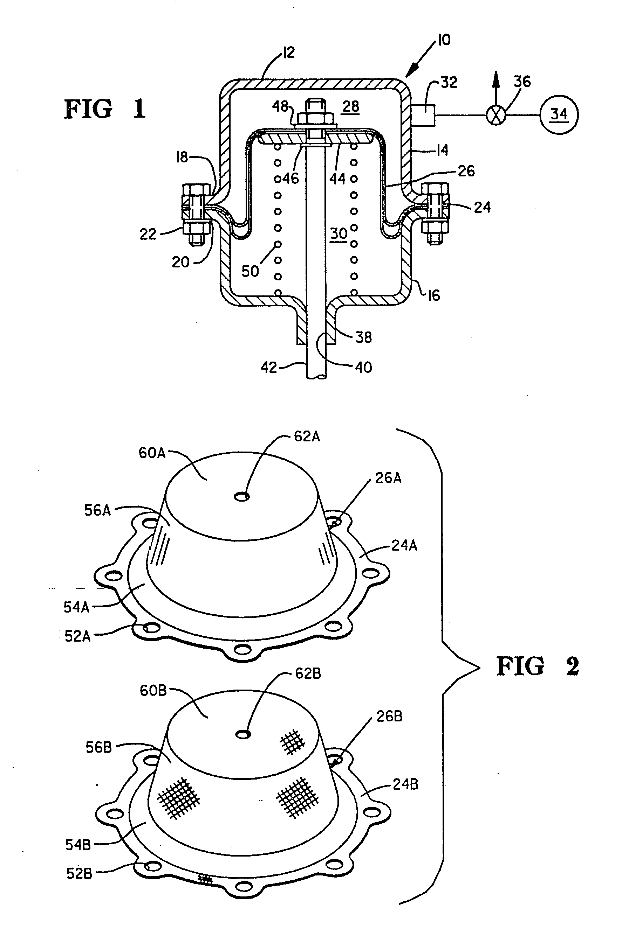

Figure 1 depicts a fluid pressure motor 10 of the spring-rolling diaphragm type having a cylindrical chambered housing 12. The housing 12 includes a first part 14 and second part 16, each having a respective radially extending flange 18, 20, the flanges 18, 20 being connected together by an annular array of fasteners 22. The flanges 18, 20 sealingly clamp between them a marginal flange portion 24 of a diaphragm 26. The diaphragm 26 sealingly divides the interior of the housing 12 into a pair of variable-volume chambers 28, 30 and defines a movable separator between the two chambers. The housing 12 has a port 32 opening to the cavity 28 through which pressure fluid from a source 34 may be selectively introduced to and vented from the chamber 28. A two-way valve 36 is employed selectively to supply and vent pressure fluid from the chamber 28.

The housing part 16 includes a guide portion 38 which defines a bore 40. An actuator rod 42 is movably received in the bore 40 and extends into the chamber 30. There is a clearance between the actuator rod 42 and the bore 40, and so the chamber 30 is open to ambient pressure. At the inner end of the actuator rod 42, an annular support plate 44 is captively received between a shoulder 46 on the rod 42 and the diaphragm 26. A retainer 48 threadably engages the rod 42 and sealingly engages the diaphragm 26 to secure the support plate on the rod 42 against the shoulder 46.

In order to bias resiliently the actuator rod support plate 44 and the diaphragm 26 to a first position (not illustrated) in which the rod 42 is fully withdrawn into the housing 12, a coil compression spring 50 extends between the housing part 16 and the support plate 44. With the exception of the diaphragm 26, all of the foregoing is conventional, and those skilled in the art will recognise that a load may be attached to the distal end of the rod 42. The load may then be selectively moved by manipulation of the valve 36 to supply and vent pressure fluid from the chamber 28. The position of the load will be a function of the pressure in chamber 28, the effective area of the diaphragm 26, and the preload and rate of the spring 50, as well as the static and dynamic friction, and the weight or spring force (if any) of the load.

Turning now to Figure 2, it will be seen that the diaphragm 26 is in fact made up of two separate component parts. Part 26A is a moulded, yieldable but shape-retaining gas impermeable membrane. At first blush, the membrane 26A might be mistaken for a conventional, preformed rolling diaphragm. However, as pointed out above, conventional diaphragms include a reinforcing fabric ply, or a multitude of plies, which are impregnated with elastomer. In contrast, the membrane 26A is made entirely of elastomer material with no fibrous or fabric reinforcement. Consequently, the membrane 26A is highly yieldable.

The diaphragm 26 also includes a moulded, yieldable, shape-retaining, gas-permeable fabric member 26B. The fabric member 26B is formed of woven fibrous material which under heat and pressure is formed over a die to the configuration illustrated. Even though the fabric member 26B is shape-retaining, it is very yieldable, having only the stiffness of a compliant fabric to retain its moulded shape. The fabric member 26B is free of elastomeric material. Hereafter, reference numerals referring to one of the components 26A, 26B and not including a postscript A or B, refer to features common to both.

Comparing the component parts 26A and 26B of the diaphragm 26, it will be seen that each includes a radially outer, radially extending flange portion 24. Each of the flange portions 24 includes a series of annularly arranged corresponding bolt holes 52 which align to receive fasteners as shown in Figure 1. Immediately radially inward of the flange portion 24, each part 26A, 26B, defines a frustroconical transition portion 54. The transition portion 54 connects the flange portion 24 with a cylindrical or slightly frustroconical flexing portion 56. Considering Figure 1, it will be seen that the portion 56, during working of the actuator 10, forms a convolute referenced with numeral 58. As the actuator rod 42 moves linearly in the guide portion 38, the material of portion 56 flexes through the convolute 58. The "rolling" motion of this convolute with working of the diaphragm 26 leads to the general descriptive term "rolling diaphragm".

Preferably, the flexing portion 56 is slightly frustroconical to predispose the material of the portion 56 to form the convolute 58 so that the radially inner and radially outer portions do not interfere with or rub against one another as the diaphragm 26 moves during working of the actuator 10. The diaphragm 26 also includes a central disc portion 60 which overlies the support plate 44 and which defines an aperture 62 which receives the rod 42 adjacent the retainer 48.

During operation of the actuator 10 a supra-ambient pressure in chamber 28 results in the diaphragm 26 transferring force to the support plate 44. The disc portion 60 of the diaphragm 26 presses on the support plate 44 according to its area and the differential pressure between the chambers 28 and 30. However, the effective area of the diaphragm 26 exceeds that of disc portion 60, and this additional increment of force is conveyed to the support plate 44 by tension forces in the flexing portion 26. As long as the differential pressure between the chambers 28 and 30 is below a determined relatively low level set by the elasticity of the membrane part 26A, the Applicants believe that these tension forces are carried and transmitted by the membrane part 26A alone. In other words, below a certain differential pressure and output force for the actuator 10, the fabric part 26B of the diaphragm 26 does not carry any significant stress. Under these working conditions, the fabric part 26B is simply carried along and its flexing portion 56 flexes through the convolute 58 without actually supporting the membrane part 26A.

However, when the differential pressure between the chambers 28 and 30 exceeds the determined level, the membrane part 26A is believed to stretch slightly, particularly in its flexing portion 56A, and is then supported by the flexible but substantially inextensible fabric part 26B. Consequently, tension forces which exceed the relatively low level described above are transmitted by the membrane part 26A to the fabric part 26B for transmittal to the support plate 44. From the above, it will easily be appreciated that the membrane part 26A is never forced to carry tension forces significantly exceeding the relatively low level previously described. It will also be clear that the fibres of the fabric part 26B are always free to move relative one another in the flexing portion 56.

Comparative testing of conventional diaphragms and of diaphragms according to the present invention, both constructed using the same fabrics and elastomeric materials, have confirmed that the flexing life of the diaphragm according to the invention ranges from an improvement of from about 150% to as much as almost 430% of the life of a conventional diaphragm. Specifically, the Applicants have tested comparatively conventional diaphragms and diaphragms made according to the present invention by installing a plurality of actuators 10 in an oven. With the oven temperature and supply air to the actuators both maintained at substantially 400°F, (204°C) the actuators were repeatedly cycled through their full movement until the diaphragm failed. Among the conventional diaphragms tested, none endured even 100,000 cycles. Some conventional diaphragms failed after as few as 15,000 cycles.

On the other hand, the diaphragms according to the invention endured a minimum of 100,000 cycles. In fact some of these diaphragms endured over a quarter of a million (250,000) cycles without failure. In one case, a diaphragm which had survived 250,000 cycles at 400°F (204°C) was subjected to additional cycles at a temperature of 600°F (316°C) in an attempt to determine its life under very adverse conditions. This diaphragm endured an additional 15,700 cycles, which is more than the life of some conventional diaphragms at 400°F (204°C).

Turning now to manufacture of a diaphragm according to the invention, it will be seen from Figure 2 that the membrane 26A and the fabric part 26B appear to be identical in shape. In fact, these parts may be formed using the same male pattern. Sheet elastomer or sheet fabric may be held in a frame and stretched over the male pattern while heat and pressure or vacuum are used to conform the sheet material to the pattern. After removal from the pattern, the perimeter of the flange 24 is trimmed and the holes 52, 62 are punched to result in the generally "hat" shaped articles shown in Figure 2. Installation of the diaphragm 26 in an actuator simply involves nesting the fabric part 26B within the membrane part 26A and assembly of the nested parts into an actuator in a conventional manner. The only caveat to be observed is that the membrane side of the diaphragm 26 must be the side exposed to the higher pressure. If it is desired to reduce the number of parts forming the actuator, the parts 26A and 26B may be adhesively secured together at the flange portion 24.

## Claims

1. A diaphragm (26) having a flexing portion, characterised in that it comprises: a gas impermeable membrane member (26A) having a selected configuration and being composed essentially of an elastomeric material, and a gas permeable fabric member (26B) having the same configuration and being composed essentially of a fibrous fabric, the membrane member (26A) and the fabric member (26B) being arranged to be united in use without interbonding in the flexing portion.

2. A diaphragm as claimed in Claim 1 characterised in that the membrane member (26A) and the fabric member (26B) each have radially extending flange portion (24), the flange portions of the two members being congruent.

3. A diaphragm as claimed in Claim 1 or Claim 2 characterised in that the membrane member (26A) and the fabric member (26B), in their unrestrained conditions, each define a respective substantially cylindrical or slightly frustroconical portion to form the flexing portion (56) of the diaphragm which in turn forms an annular convolute (58).

4. A diaphragm as claimed in Claim 2 or Claim 3, characterised in that the membrane member and the fabric member are adhesively intersecured only at their respective flange portions (24), the flange portions (24) not forming part of the flexing portion.

5. A diaphragm as claimed in Claim 3 or Claim 4 characterised in that the membrane and fabric members (26) each include a central annular disc portion (60) connected respectively to the generally cylindrical or frustroconical part (56).

6. A fluid pressure motor (10) characterised by a diaphragm (26) as claimed in any preceding claim in which the fabric member (26B) and the membrane member (26A) are clamped together by two sections (14,16) of a housing (12) thereby dividing the chamber formed within the housing into first and second cavities (28,30) whose volumes are variable in dependence upon the position of diaphragm (26).

7. A motor as claimed in Claim 6 characterised in that the first cavity (28) has an inlet (32) for connection to a source of high pressure (34), the second cavity (30) is open to ambient pressure, and resilient means (50) are provided to urge the diaphragm (26) towards the first cavity (28).

8. A motor as claimed in Claim 7 characterised in that the membrane member (26A) faces the first cavity (28) and the fabric member (26B) faces the second cavity (30).

9. A motor as claimed in Claim 8 characterised in that the membrane member (26A) is unsupported by the flexing portion of the fabric member (26B) at differential fluid pressure levels lower than a determined value, the membrane member stretching to be supportingly engaged by the fabric member at the flexing portions of the two members at differential fluid pressures above the determined value.

10. A method of making a highly flexible diaphragm (26) characterised by the steps of forming a gas-permeable fibrous fabric member (26B) having a selected shape including a flexing region, forming a gas-impermeable elastomeric membrane member (26A) having a certain shape cooperably matching with the selected shape of the fabric member and including a flexing region corresponding with the flexing region of the fabric member, and operatively uniting the fabric member (26B) and the membrane member (26A) without interbonding between them in their respective flexing regions.

11. A method as claimed in Claim 10 characterised in that the fabric member is free of impermeable elastomeric material in its flexing region, and the membrane member is free of fibrous reinforcing material in its flexing region and by the further step of adhesively intersecuring the fabric member and the membrane member to one another in a selected region apart from the corresponding flexing regions, which selected region does not flex during working of the diaphragm.

0261949

**FIG 1**

**FIG 2**